# EUROPÄISCHE PATENTSCHRIFT

(11) **EP 3 808 685 B1**
(45) Veröffentlichungstag und Bekanntmachung des Hinweises auf die Patenterteilung: **01.01.2025**
(21) Anmeldenummer: 19203612.7
(22) Anmeldetag: 16.10.2019
(51) Int. Cl.: B65G 1/04, B65G 1/137

(54) **VORRICHTUNG UND VERFAHREN FÜR DAS SORTIEREN UND KOMMISSIONIEREN VON ARTIKELN**
DEVICE AND METHOD FOR SORTING AND PICKING ARTICLES
DISPOSITIF ET PROCÉDÉ POUR LE TRI ET LA PRÉPARATION DE COMMANDES D'ARTICLES

(43) Veröffentlichungstag der Anmeldung: 21.04.2021
(73) Patentinhaber: apo.com Group GmbH, 04416 Markkleeberg (DE)
(72) Erfinder: FRITSCH, Mike, 74206 Bad Wimpfen (DE)
(74) Vertreter: Maikowski & Ninnemann Patentanwälte Partnerschaft mbB

(56) Entgegenhaltungen:
- EP-A1- 2 477 914
- WO-A1-2018/132855
- WO-A1-2018/175717
- WO-A2-2019/169419
- DE-A1- 102012 102 333
- DE-A1- 102013 103 869
- DE-A1- 3 100 020
- FR-A1- 3 040 164
- JP-A- 2007 182 290
- JP-A- 2009 286 617
- US-A1- 2014 244 026
- US-B2- 10 384 872

## Beschreibung

Die Erfindung betrifft ein Verfahren gemäß Anspruch 1 zum Sortieren und Kommissionieren von Artikeln, umfassend die Verfahrensschritte
I. Sortieren von Artikeln aus mindestens einem Lagerbehälter in mindestens einen sortierten Zielbehälter;
   und
II. Kommissionieren von Artikeln aus mindestens einem Lagerbehälter in mindestens einen Zielbehälter nach einer vorgegebenen Kommissionierliste.

Das erfindungsgemäße Verfahren zeichnen sich dabei durch eine hohe Effizienz und Schnelligkeit aus.

Sortieren und Kommissionieren sind wichtige Arbeitsschritte in einem Warenlager, um Artikel effizient in einem Warenlager einzulagern und Artikel aus dem Warenlager entsprechend von Kommissionierlisten zum Beispiel für einen Versand zusammenzustellen. Die einzelnen Schritte sollen dabei möglichst schnell von statten gehen, um einen möglichst effizienten und damit ökonomischen Arbeitsablauf zu gewährleisten.

Aus dem Stand der Technik sind dabei Verfahren und Vorrichtungen bekannt, bei denen Regallager genutzt werden, die sortenrein mit Artikeln bestückt sind. Die Regale können gesteuert von einer Computereinheit Artikel auf eine Fördertechnik abgeben, die diese Artikel in einen Zielkarton transportiert. Die Steuerung kann dabei gemäß einer Kommissionierliste erfolgen. Nachteilig an diesen Vorrichtungen und Verfahren ist, dass die Regallager händisch von einem Mitarbeiter bestückt werden müssen. Dieser Vorgang muss je nach Verbrauch der Artikel kontinuierlich von statten gehen. Ein weiterer Nachteil ist der große Platzbedarf einer solchen Vorrichtung. Alle Regale müssen Zugang zur Fördertechnik haben und müssen gleichzeitig zum Bestücken für einen Mitarbeiter zugänglich sein. Zudem ist es nicht möglich zerbrechliche Artikel mit diesen Verfahren zu kommissionieren, da diese nicht ausreichend vorsichtig mit den Artikeln umgehen und es so zu Beschädigungen an den Artikeln kommen kann.

Alternativ sind Lagersysteme bekannt, die Lagerbehälter mit Artikeln nach dem ABC-Prinzip oder dem Chaotischen Prinzip einlagern.

In diesen Lagersystemen werden Lagerbehälter an willkürlichen Positionen abgestellt. Die Lagerbehälter werden übereinander gestapelt, wodurch ein hoher Volumennutzungsgrad erreicht wird. Das heißt, auf wenig Raum können viele Lagerbehälter und damit Artikel gelagert werden. Solche Lagersysteme verfügen über Roboter die die Lagerbehälter umstapeln und einen angeforderten Lagerbehälter zu einem definierten Platz, beispielsweise einem Kommissionierplatz bringen. An einem solchen Kommissionierplatz kann dann die Kommissionierung von Hand durch einen Mitarbeiter vorgenommen werden. Nachteilig an diesen Verfahren ist, dass sie eher langsam sind. Beim Einlagern nach dem Chaotischen Prinzip werden die Lagerbehälter an einem willkürlichen frei gewählten Ort im Lagersystem abgestellt. Wenn nun ein bestimmter Lagerbehälter angefordert wird, muss j eweils eine Umlagerung von Lagerbehältern vorgenommen werden, die über dem gewünschten Lagerbehälter stehen, um an den gewünschten Lagerbehälter zu gelangen. Dies ist ein zeitraubender Vorgang.

Beim Einlagern nach dem ABC-Prinzip, wie es beispielsweise in einem sogenannten Autostore angewendet wird, werden die Lagerbehälter ebenfalls übereinander abgestellt. Wird nun ein Behälter aus dem Lager angefordert, so stapelt ein Roboter alle Lagerbehälter, die über dem angeforderten Lagerbehälter stehen auf umliegende Stapel. Wenn der Roboter den gewünschten Lagebehälter entnommen hat, räumt ein weiterer Roboter auf und stapelt alle zwischengelagerten Lagerbehälter in umgekehrter Reihenfolge wieder aufeinander. Nach der Kommissionierung wird der Lagerbehälter oben auf dem Stapel abgestellt. Auf diese Weise befinden sich Lagerbehälter, die oft angefragt werden oben auf den Stapeln und Lagerbehälter, die seltener benötigt werden, wandern automatisch nach unten in den Stapeln. Auch in diesem System müssen daher zeitraubend Lagerbehälter umgestapelt werden, um an einen gewünschten Lagerbehälter zu gelangen.

Besonderes Augenmerk muss weiterhin auf die Fehlerfreiheit der Vorrichtungen und Verfahren beim Kommissionieren gelegt werden, da das versehentliche Kommissionieren von falschen Artikeln unbedingt vermieden werden muss. Das Kommissionieren von falschen Artikeln bedeutet dabei, dass Artikel zusammengestellt werden, die nicht auf der Kommissionierliste vorhanden sind.

Besonders wichtig ist dies im Bereich von Apothekenartikeln, bei denen aufgrund von falscher Kommissionierung gesundheitliche Risiken für einen Endverbraucher entstehen können. Wird ein falsches Medikament aus einem Warenlager an eine Apotheke geliefert, so wird der Fehler im besten Fall vom Apotheker erkannt, im schlimmsten Fall wird jedoch das falsche Medikament an den Kunden ausgegeben. Eine zuverlässige Überprüfung des Kommissionierens ist daher unerlässlich.

Aus dem Stand der Technik sind Verfahren bekannt, bei denen beim Kommissionieren von Artikeln eine Sichtkontrolle durch einen Mitarbeiter erfolgt. Diese Verfahren sind jedoch langsam und haben den Nachteil, dass ein Mitarbeiter mit gleichbleibend hohem Aufmerksamkeitsgrad einer eher eintönigen Arbeit nachgeht. Solche Arbeitsschritte bergen immer die Gefahr von menschlichen Fehlern aufgrund von sinkender Aufmerksamkeit mit der Zeit.

Weiterhin sind aus dem Stand der Technik Verfahren bekannt, bei denen eine optische Einheit eine Sichtkontrolle der zu kommissionierenden Artikel durchführt und bei einer Fehlererkennung den fraglichen Artikel aussortiert und entsprechend eine Warnmeldung abgibt. In diesem Fall kann dann ein Mitarbeiter eingreifen. Auch diese Verfahren zeichnen sich durch eine eher geringe Geschwindigkeit und damit geringe Effizienz aus.

Die WO 2018/175717 A1 betrifft ein System und ein Verfahren zur Kommissionierung von Produkten. Dabei werden ausschließlich sortenreine Artikel aus Behältern sortiert.

DE 10 2013 103869 A1 offenbart ein Verfahren gemäß dem Oberbegriff des Anspruchs 1.

Aufgabe der vorliegenden Erfindung ist es ein Verfahren zur Verfügung zu stellen, das die Nachteile des Standes der Technik überwindet und ein Verfahren zum Sortieren und Kommissionieren zur Verfügung stellt, das Platz sparend, schnell und ökonomisch ist. Dabei wird eine fehlerfreie Kommissionierung von Artikeln gewährleistet.

Die Erfindung stellt ein Verfahren gemäß Anspruch 1 zum Sortieren und Kommissionieren von Artikeln, umfassend die Verfahrensschritte
I. Sortieren von Artikeln aus mindestens einem Lagerbehälter in mindestens einen sortierten Zielbehälter;
   und
II. Kommissionieren von Artikeln aus mindestens einem Lagerbehälter in mindestens einen Zielbehälter nach einer vorgegebenen Kommissionierliste;
zur Verfügung.

Das Verfahren gemäß der vorliegenden Erfindung kann erfindungsgemäß zum Sortieren und Kommissionieren von Versandartikeln, insbesondere Apothekenartikeln und Drogerieartikeln verwendet werden.

### Detaillierte Beschreibung

Eine nicht zur Erfindung gehörende Vorrichtung für die Sortierung und Kommissionierung von Artikeln umfasst mindestens einen Roboter mit einer Greifeinheit. In einer bevorzugten Ausführungsform ist der mindestens eine Roboter mit einer Greifeinheit ein Knickarmroboter oder ein Portalsystem. Besonders bevorzugt ist der mindestens eine Roboter mit einer Greifeinheit ein Knickarmroboter.

Knickarmroboter oder auch Portalsysteme sind aus dem Stand der Technik bereits bekannt. Der Roboter weist eine Greifeinheit auf, die sowohl einen Greifarm als auch eine Saugeinheit aufweist. Die Saugeinheit ist bevorzugt mittig des Greifarms angeordnet und ermöglicht das Ansaugen eines Artikels, während die Finger des Greifarms den Artikel stabilisieren. Durch diese Technik ist eine sehr sanfte Aufnahme und Ablage von Artikeln möglich, wodurch auch zerbrechliche Artikel bewegt werden können.

In einer Form weist die Vorrichtung genau einen Roboter mit einer Greifeinheit auf. In einer weiteren Form weist die Vorrichtung zwei, drei oder vier Roboter mit einer Greifeinheit auf. An jedem Roboter befindet sich mindestens eine optische Vorrichtung zum Erfassen eines Bildes und/oder eines Codes. In einer bevorzugten Form umfasst die optische Vorrichtung zum Erfassen eines Bildes und/oder eines Codes eine Kamera und/oder einen Codeleser.

In einer Form umfasst die Vorrichtung weiterhin mindestens eine optische Einrichtung zum Erfassen eines Codes eines Zielbehälters und/oder eines Lagerbehälters. Wobei die optische Einrichtung ein Codeleser sein kann. In einer bevorzugten Form umfasst die Vorrichtung genau eine optische Einrichtung zum Erfassen eines Codes eines Zielbehälters.

In einer weiteren Form umfasst die Vorrichtung eine optische Einrichtung zum Erfassen eines Codes eines Zielbehälters und eine optische Einrichtung zum Erfassen eines Codes eines Lagerbehälters.

Ein Codeleser gemäß der vorliegenden Erfindung ist ein Codeleser der geeignet ist einen RFID Chip, einen QR-Code, einen 2D-DataMatrix Code, eine Schrift oder einen Barcode zu erkennen. Geeignete Codeleser sind beispielsweise Laserscanner, CCD-Kamerascanner oder RFID-Lesegeräte.

Die optische Vorrichtung zum Erfassen eines Bildes ist beispielsweise eine CCD-Kamera.

In einer Form der Vorrichtung weist jeder Roboter eine optische Einrichtung zum Erfassen eines Bildes und einen Codeleser auf. In einer Form der Vorrichtung weist jeder Roboter eine CCD-Kamera zum Erfassen eines Bildes und einen Codeleser in Form einer Kamera, die 2D-Strichcodes und/oder Matrixcodes erkennen kann, auf.

Die Vorrichtung weist weiterhin mindestens zwei Präsentiertische auf. In einer Form weist die Vorrichtung 2 bis 10, bevorzugt 4 bis 8, besonders bevorzugt 6 Präsentiertische auf. Die Präsentiertische gemäß der vorliegenden Erfindung sind dazu geeignet, Lagerbehälter und/oder Zielbehälter darauf abzustellen.

In einer Form der Vorrichtung weist diese mindestens einen Zugang zu mindestens einem Warenlager auf. In einer Form weist die Vorrichtung zwei Zugänge zu zwei unterschiedlichen Warenlagern auf. Die unterschiedlichen Warenlager können beispielsweise zwei Warenlager sein, die nach dem Chaotischen Prinzip oder nach dem ABC-Prinzip einlagern oder ein Warenlager, das nach dem Chaotischen Prinzip oder dem ABC-Prinzip einlagert und ein Warenlager, das nach dem Festplatzprinzip einlagert. In einer Form weist die Vorrichtung einen Zugang zu einem Warenlager auf, welches nach dem Chaotischen Prinzip oder dem ABC-Prinzip einlagert und einen Zugang zu einem Warenlager, das nach einem Festplatzprinzip einlagert.

In einer weiteren Form weist die Vorrichtung genau einen Zugang zu einem Warenlager auf, bevorzugt ist dieses Warenlager ein Warenlager, das nach dem Chaotischen Prinzip oder dem ABC-Prinzip einlagert.

Weiterhin weist die Vorrichtung mindestens einen Zielbehälter auf. In einer Form ist der Zielbehälter ein Lagerbehälter oder ein Versandkarton. Die Lagerbehälter können dabei Trennwände zur Unterteilung des Innenraums aufweisen. Optional weisen die Zielbehälter eine Kennzeichnung auf, durch die sie eindeutig identifiziert werde können. Geeignete Kennzeichnungen sind beispielsweise ein RFID-Chip, ein QR-Code, ein 2D-DataMatrix Code, eine Schrift oder ein Barcode.

In einer Form weist die Vorrichtung 1 bis 9 Zielbehälter, bevorzugt 1 bis 7 Zielbehälter, besonders bevorzugt 1 bis 5 Zielbehälter auf. In einer Form weist die Vorrichtung genau einen Zielbehälter in Form eines Versandbehälters auf. In einer weiteren Form weist die Vorrichtung 1 bis 5 Lagerbehälter als Zielbehälter auf.

Die Vorrichtung weist eine Datenverarbeitungseinheit auf, die dazu eingerichtet ist, die Informationen der optischen Einrichtung zu verarbeiten, zu speichern und untereinander oder mit bereits hinterlegten Daten zu vergleichen. Bevorzugt sind Artikelstammdaten hinterlegt, die geeignet sind, durch den Vergleich mit den Informationen der optischen Einrichtung Artikel zu identifizieren.

Die Vorrichtung weist weiterhin mindestens eine Fördertechnik auf. Geeignete Fördertechnik kann ein Transportband, ein Rollenförderer, ein Gurtförderer oder ähnliches sein. In einer bevorzugten Ausführungsform ist die Fördertechnik ein Rollenförderer. Die Fördertechnik ist dazu eingerichtet Zielbehälter zu transportieren.

In einer Ausführungsform weist die Vorrichtung genau einen Roboter mit einem Greifarm und 2 bis 10, bevorzugt 4 bis 8, besonders bevorzugt 6 Präsentiertische mit je einem Zugang zu mindestens einem Warenlager und eine Fördertechnik auf.

Die Vorrichtung ist dazu eingerichtet, in einem ersten Arbeitsmodus nicht sortenreine und sortenreine Artikel aus mindestens einem Lagerbehälter in mindestens einen Zielbehälter zu sortieren. In einem zweiten Arbeitsmodus ist die Vorrichtung dazu eingerichtet, Artikel aus mindestens einem sortierten Lagerbehälter in mindestens einen Zielbehälter nach einer vorgegebenen Kommissionierliste zu kommissionieren.

Die Präsentiertische der Vorrichtung sind so angeordnet, dass sie für eine Greifeinheit eines Roboters zugänglich sind. In einer Form, sind 6 Präsentiertische um einen Roboter mit Greifeinheit angeordnet, so dass alle Präsentiertische für die Greifeinheit des Roboters erreichbar sind. Erreichbar bedeutet in diesem Fall, das die Greifeinheit in einen auf dem Präsentiertisch abgestellten Zielbehälter hineingreifen kann. Der komplette Innenraum des Zielbehälters kann dabei von der Greifeinheit erreicht werden.

Weiterhin weist mindestens ein Präsentiertisch einen Zugang zu einem Warenlager auf. Zugang bedeutet in diesem Zusammenhang, dass Lagerbehälter aus dem Warenlager auf dem Präsentiertisch präsentiert werden können. In einer Form der Vorrichtung weist jeder Präsentiertisch einen Zugang zu mindestens einem Warenlager auf. Dies kann für alle Präsentiertische das gleiche Warenlager sein, es können aber auch verschiedene Präsentiertische Zugänge zu verschiedenen Warenlagern haben.

In einer weiterhin Form weist die Vorrichtung 6 Präsentiertische auf, wobei alle Präsentiertische einen Zugang zu einem gemeinsamen Warenlager aufweisen und ein Präsentiertisch zusätzlich einen Zugang zu einem anderen Warenlager aufweist.

Weiterhin weist die Vorrichtung eine Fördertechnik auf. Die Fördertechnik ist so angeordnet, dass ein Zielbehälter beispielsweise in Form eines Versandbehälters so präsentiert werden kann, dass der komplette Innenraum des Zielbehälters von der Greifeinheit des Roboters erreicht werden kann.

Die vorliegende Erfindung umfasst ein Verfahren gemäß Anspruch 1 zum Sortieren und Kommissionieren von

Artikeln. Das Verfahren weist folgende Verfahrensschritte auf:
I. Sortieren von Artikeln aus mindestens einem Lagerbehälter in mindestens einen sortierten Zielbehälter;
   und
II. Kommissionieren von Artikeln aus mindestens einem Lagerbehälter in mindestens einen Zielbehälter nach einer vorgegebenen Kommissionierliste.

Der Verfahrensschritt I. umfasst die Schritte
A. Präsentieren eines Lagerbehälters mit Artikeln auf einem Präsentiertisch;
B. Präsentieren von mindestens einem Zielbehälter auf mindestens einem weiteren Präsentiertisch;
C. Optional Identifikation des mindestens einen Zielbehälters und jedes weiteren Zielbehälters;
D. Entnehmen eines Artikels aus dem Lagerbehälter und Einlesen des Codes des Artikels und/oder Aufnahme mindestens eines Bildes und Identifikation des Artikels;
E. Ablage des Artikels in dem mindestens einen Zielbehälter oder einem der weiteren Zielbehälter;
F. Verknüpfung der Kennzeichnung des mindestens einen Zielbehälters oder der Kennzeichnung eines der weiteren Zielbehälter mit dem Code und/oder dem Bild des darin abgelegten Artikels;
G. Optional Einlagern des mindestens einen Zielbehälters oder eines der weiteren Zielbehälter oder aller Zielbehälter nach Beendigung des Sortiervorgangs in einem Warenlager.

Im Schritt A. wird ein Lagerbehälter mit Artikeln auf einem Präsentiertisch präsentiert. Der Lagerbehälter kann dabei sortenreine oder auch nicht sortenreine Artikel beinhalten. In einer bevorzugten Ausführungsform der Erfindung stammt der Lagerbehälter aus einem angeschlossenen Warenlager.

Gemäß Schritt B. wird mindestens ein Zielbehälter auf mindestens einem weiteren Präsentiertisch präsentiert. Der mindestens eine Zielbehälter kann leer sein oder auch sortierte Artikel beinhalten. Die sortierten Artikel wiederum können sortenrein sein oder auch nicht sortenrein. In einer Ausführungsform der Erfindung werden 1 bis 9, bevorzugt 2 bis 8, besonders bevorzugt 5 weitere Zielbehälter in Schritt B. gleichzeitig präsentiert. In diesem Fall wird je ein Zielbehälter auf einem Präsentiertisch präsentiert.

Optional wird im darauffolgenden Verfahrensschritt der mindestens eine Zielbehälter und jeder weitere Zielbehälter identifiziert, wenn deren Identität nicht bereits durch das genutzte Warenlager bekannt ist. Hierfür können die Zielbehälter beispielsweise eine geeignete Kennzeichnung aufweisen. Eine geeignete Kennzeichnung ist ein RFID-Chip, ein QR-Code, ein 2D-DataMatrix Code, eine Schrift oder ein Barcode. Die Kennzeichnung wird durch einen geeigneten Codeleser wie beispielsweise einen Laserscanner, einen CCD-Kamerascanner oder ein RFID-Lesegeräte ausgelesen. Werden als Zielbehälter Lagerbehälter genutzt, die aus einem Warenlager stammen, das nach dem Chaotischen Prinzip oder dem ABC-Prinzip arbeitet, ist eine Identifikation nicht notwendig, da die Identität der Lagerbehälter und damit deren Kennzeichnung bereits aufgrund von deren Position im Warenlager bekannt ist.

Gemäß Schritt D. wird ein Artikel aus dem Lagerbehälter entnommen, der Code des Artikels eingelesen und/oder mindestens ein Bild des Artikels aufgenommen und der Artikel dadurch identifiziert.

In einer Ausführungsform der Erfindung weisen die Artikel einen Code auf, der geeignet ist, den Artikel eindeutig zu identifizieren. Ein solcher Code ist beispielsweise ein RFID-Chip, ein QR-Code, ein 2D-DataMatrix Code, eine Schrift oder ein Barcode.

Kann der Artikel beim ersten Aufnehmen des Artikels aus dem Lagerbehälter nicht identifiziert werden, beispielsweise weil sich der Code auf der falschen Seite des Artikels befindet oder teilweise durch die Greifeinheit verdeckt wird, so wird der Artikel noch einmal in den Lagerbehälter zurückgelegt und anschließend noch einmal aufgenommen. Durch das zurücklegen und wieder aufnehmen ändert sich die Position des Artikels in der Greifeinheit und das Einlesen des Codes ist nun im Allgemeinen möglich.

In einer weiteren Ausführungsform der Erfindung wird von dem Artikel ein Bild aufgenommen. Auch durch die Aufnahme eines Bildes ist die Identifikation des Artikels möglich, beispielsweise durch Schrifterkennung oder die Aufnahme eines QR-Codes. Darüber hinaus können durch das mindestens eine Bild weitere Informationen wie beispielsweise das Haltbarkeitsdatum eines Artikels mit dem jeweiligen Artikel verknüpft werden. Es ist daher möglich, Artikel beispielsweise nach deren Haltbarkeitsdatum zu sortieren. Darüber hinaus kann durch die Aufnahme eines Bildes überprüft werden, ob die Umverpackung eines Artikels unbeschädigt ist.

Wurde der Artikel identifiziert, wird der Artikel in dem mindestens einen Zielbehälter abgelegt oder einem der weiteren Zielbehälter.

Ist eine Identifikation des Artikels jedoch nicht möglich, so greift der Roboter ein weiteres Produkt aus dem Lagerbehälter und identifiziert dieses, indem der Code des Artikels eingelesen und/oder mindestens ein Bild des Artikels aufgenommen wird. Gelingt erneut keine Identifizierung wird der Lagerbehälter zu einem Kontrollplatz gebracht und ein neuer Lagerbehälter präsentiert, der zu sortierende Artikel enthält.

In Schritt F. wird die Kennzeichnung des mindestens einen Zielbehälters oder die Kennzeichnung eines der weiteren Zielbehälter mit dem Code und/oder dem Bild des darin abgelegten Artikels verknüpft.

In einer Ausführungsform der Erfindung wird der mindestens eine Zielbehälter oder einer der weiteren Zielbehälter oder alle Zielbehälter nach Beendigung des Sortiervorgangs in einem Warenlager eingelagert.

Nach dem Sortiervorgang gemäß dem Verfahrensschritt I. der vorliegenden Erfindung stehen Zielbehälter zur Verfügung, die sortierte Artikel beinhalten.

Ein Artikel ist im Rahmen der vorliegenden Erfindung sortiert, wenn er durch das Einlesen eines Codes und/oder das Aufnehmen eines Bildes identifiziert wurde und in einem gekennzeichneten Zielbehälter abgelegt wurde. Wobei die Kennzeichnung des Zielbehälters mit dem Code und/oder dem Bild des Artikels verknüpft ist und somit nach dem Sortieren bekannt ist, in welchem Zielbehälter sich der Artikel befindet.

Das Verfahren gemäß des Verfahrensschrittes I. ist dazu geeignet, unsortierte oder sortierte Artikel in Zielbehälter zu sortieren.

Besonders bevorzugt ist der mindestens eine Zielbehälter und jeder weitere Zielbehälter im Verfahrensschritt I. ein Lagerbehälter.

In einer Ausführungsform der Erfindung werden dabei unsortierte Artikel sortenrein in Lagerbehälter sortiert. Dabei kann ein Lagerbehälter sortenrein einen bestimmten Artikel beinhalten. Der Innenraum des Lagerbehälters kann aber auch durch eine oder mehrere Trennwände unterteilt sein, wobei in jede Unterteilung sortenrein Artikel sortiert werden. Dies ist besonders platzsparend bei kleinen Artikeln oder Artikeln in geringer Stückzahl.

In einer Ausführungsform der Erfindung können unsortierte Artikel auch nicht sortenrein in einen Lagerbehälter sortiert werden. Dies hat den Vorteil das Artikel in geringer Stückzahl effektiv eingelagert werden können. Aufgrund der Sortierung ist jedoch bekannt in welchem Lagerbehälter sich der entsprechende Artikel befindet.

In einer weiteren Ausführungsform der Erfindung können bereits sortierte Artikel in Lagerbehälter sortiert werden. Diese Ausführungsform hat den Vorteil, dass Lagerbehälter, deren Kapazität nicht vollständig ausgenutzt wird, weiter bestückt werden können und damit eine effiziente Lagerung von Artikeln ermöglicht wird.

Das erfindungsgemäße Verfahren umfasst weiterhin den Verfahrensschritt II., der die Schritte
a. Erfassen der Artikel, die in einem bestimmten Zeitraum in Zielbehälter kommissioniert werden sollen und bestimmen der Häufigkeit jedes in diesem Zeitraum zu kommissionierenden Artikels anhand von Kommissionierlisten;
b. Präsentieren eines Lagerbehälters, der den am häufigsten zu kommissionierenden Artikel enthält;
c. Optional präsentieren des Lagerbehälters, der den Artikel enthält, der mit der nächstgrößten Häufigkeit zu kommissionieren ist;
d. Optional präsentieren weiterer Lagerbehälter mit den Artikeln, die mit der jeweils nächstgrößten Häufigkeit zu kommissionieren sind;
e. Präsentieren eines Zielbehälters;
f. Identifikation des Zielbehälters und Verknüpfen des Zielbehälters mit einer Kommissionierliste;
g. Entnehmen eines Artikels, der auf der Kommissionierliste des Zielbehälters vorkommt aus einem Lagerbehälter;
h. Einlesen des Codes des Artikels und/oder Aufnahme mindestens eines Bildes und Identifikation des Artikels;
i. Vergleich des Artikels mit dem laut Kommissionierliste zu kommissionierenden Artikel;
j. Ablage des Artikels in dem Zielbehälter, wenn der Artikel mit dem laut Kommissionierliste zu kommissionierenden Artikel übereinstimmt;
k. Wiederholung der Schritte g. bis j. bis alle Artikel der Kommissionierliste des Zielbehälters in den Zielbehälter kommissioniert sind;
l. Abtransport des Zielbehälters;
m. Wiederholen der Schritte e. bis l. bis alle Artikel, die in dem bestimmten Zeitraum in Zielbehälter kommissioniert werden sollen, kommissioniert sind;
umfasst.

Gemäß Schritt a. wird zunächst anhand von Kommissionierlisten erfasst, welche Artikel in einem bestimmten Zeitraum in Zielbehälter kommissioniert werden sollen. Durch die Kommissionierlisten kann darüber hinaus bestimmt werden, mit welcher Häufigkeit jeder der Artikel in diesem Zeitraum zu kommissionieren ist.

Gemäß des Verfahrensschritts II. wird der Lagerbehälter, der den in dem bestimmten Zeitraum am häufigsten zu sortierenden Artikel enthält, präsentiert. Weiterhin wird optional der Lagerbehälter präsentiert, der den Artikel enthält, der in dem bestimmten Zeitraum mit der nächstgrößten Häufigkeit zu kommissionieren ist.

In einer Ausführungsform der Erfindung werden im Schritt d. optional weitere Lagerbehälter präsentiert, die Artikel enthalten, die mit der jeweils nächstgrößten Häufigkeit kommissioniert werden.

In einer bevorzugten Ausführungsform der Erfindung werden genauso viele Lagerbehälter präsentiert, dass alle laut Kommissionierlisten in dem bestimmten Zeitraum zu kommissionierenden Artikel präsentiert werden.

Gemäß Verfahrensschritt e. wird ein Zielbehälter präsentiert und gemäß Schritt f. wird dieser identifiziert und mit einer Kommissionierliste verknüpft. Hierfür weisen die Zielbehälter mindestens eine geeignete Kennzeichnung auf. Geeignete Kennzeichnungen sind beispielsweise ein RFID-Chip, ein QR-Code, ein 2D-DataMatrix Code, eine Schrift oder ein Barcode. Die Kennzeichnung wird durch einen geeigneten Codeleser wie beispielsweise einen Laserscanner, einen CCD-Kamerascanner oder ein RFID-Lesegeräte ausgelesen. In einer besonders bevorzugten Ausführungsform der Erfindung weisen die Zielbehälter einen Barcode auf, der mit einem Laserscanner ausgelesen wird.

In einer Ausführungsform wird zusätzlich in den Zielbehälter eine Kommissionierliste eingebracht, die ebenfalls die Kennzeichnung des Zielbehälters aufweist.

Das Verknüpfen des Zielbehälters mit einer Kommissionierliste bedeutet, dass die Kommissionierliste fest zu diesem Zielbehälter gehört und in diesen Zielbehälter alle Artikel der verknüpften Kommissionierliste zu kommissionieren sind. In einer bevorzugten Ausführungsform der Erfindung wird der Zielbehälter über einen angebrachten Code identifiziert und über diesen Code mit einer Kommissionierliste verknüpft.

Im Folgenden wird ein Artikel, der auf der Kommissionierliste des Zielbehälters vorkommt aus einem der präsentierten Lagerbehälter entnommen. Der Code des Artikels wird eingelesen und/oder mindestens ein Bild des Artikels wird aufgenommen. Durch den Code und/oder das mindestens eine Bild des Artikels wird der Artikel identifiziert. Der Artikel wird mit dem laut Kommissionierliste zu kommissionierenden Artikel verglichen und wenn diese übereinstimmen im Zielbehälter abgelegt. Die Schritte g. bis j. werden wiederholt, bis alle Artikel, die auf der Kommissionierliste des Zielbehälters vorkommen, kommissioniert sind. Anschließend wird der Zielbehälter abtransportiert.

In einer bevorzugten Ausführungsform der Erfindung wird der Zielbehälter auf einer Fördertechnik präsentiert und nach dem fertigen Kommissionieren über diese Fördertechnik weiter transportiert.

Die Verfahrensschritte e. bis l. werden nun so oft wiederholt, bis alle Artikel, die in dem bestimmten Zeitraum kommissioniert werden sollen, kommissioniert sind.

Besonders bevorzugt ist der Zielbehälter in Verfahrensschritt II. ein Versandkarton.

Weiterhin weist das Verfahren Schritte auf, um Kommissionierungsfehler zu verhindern. Hierfür weist der Verfahrensschritt II. nach dem Schritt i. die folgenden zusätzlichen Schritte auf, wenn der Artikel aus dem Lagerbehälter nicht mit dem laut Kommissionierliste zu kommissionierenden Artikel übereinstimmt:
ia. Ablage des Artikels, der nicht mit dem laut Kommissionierliste zu kommissionierenden Artikel übereinstimmt, in dem Lagerbehälter;
ib. Übergabe des Lagerbehälters an das Warenlager;
ic. Präsentieren eines weiteren Lagerbehälters, der den zu kommissionierenden Artikel enthält;
id. Entnehmen eines Artikels aus dem Lagerbehälter;
ie. Einlesen des Codes des Artikels und/oder Aufnahme mindestens eines Bildes und Identifikation des Artikels; und
if. Vergleich des Artikels mit dem laut Kommissionierliste zu kommissionierenden Artikel;
ig. Stimmt der Artikel mit dem laut Kommissionierliste zu kommissionierenden Artikel überein, wird das Verfahren bei Schritt j. fortgesetzt, stimmt der Artikel mit dem laut Kommissionierliste zu kommissionierenden Artikel nicht überein, wird das Kommissioniern abgebrochen,
wobei der Lagerbehälter aus Schritt ib. dem Verfahrensschritt I. zugeführt wird, um die darin befindlichen Artikel erneut zu sortieren.

Erfindungsgemäß wird der Artikel, der nicht mit dem laut Kommissionierliste zu kommissionierenden Artikel übereinstimmt, in den Lagerbehälter zurückgelegt. Der Lagerbehälter mit dem fehlerbehafteten Artikel wird anschließend einem Warenlager übergeben und ein weiterer Lagerbehälter wird präsentiert, der den zu kommissionierenden Artikel enthält. Es wird ein Artikel aus dem Lagerbehälter entnommen und dessen Code eingelesen und/oder mindestens ein Bild aufgenommen, um den Artikel zu identifizieren. Der Artikel wird wiederum mit dem laut Kommissionierliste zu kommissionierenden Artikel verglichen. Stimmen die Artikel überein wird der Verfahrensschritt II. bei Schritt j. fortgesetzt und der Artikel wird im Versandkarton abgelegt. Stimmt der Artikel mit dem laut Kommissionierliste zu kommissionierenden Artikel nicht überein, wird das Kommissionieren abgebrochen, um eine fehlerhafte Kommissionierung zu vermeiden.

Der im Verfahrensschritt ib. ins Warenlager übergebene Lagerbehälter wird erfindungsgemäß dem Verfahrensschritt I. zugeführt. Im Verfahrensschritt I. werden dann sämtliche Artikel des Lagerbehälters erneut sortiert, um so fehlerbehaftete Artikel auszusortieren und Fehler bei der Kommissionierung zu vermeiden.

In einer besonders bevorzugten Ausführungsform der Vorrichtung und des erfindungsgemäßen Verfahrens lagert das Warenlager Lagerbehälter nach dem Chaotischen Prinzip oder dem ABC-Prinzip ein. In einer besonders bevorzugten Ausführungsform der Erfindung ist das Warenlager ein Autostore.

In Warenlagern müssen gewöhnlich neue Artikel einsortiert werden und die eingelagerten Artikel wiederum anhand von Kommissionierlisten kommissioniert werden. Dabei ist die Verteilung dieser Aufgaben zeitlich unterschiedlich. Während es bei einem hohen Auftragsvolumen zu entsprechend vielen Kommissionierungsvorgängen kommt, müssen zu anderen Zeiten neu gelieferte Artikel in das Warenlager sortiert werden. Für eine effektive Lagerhaltung ist es darüber hinaus notwendig Artikel aus Lagerbehältern, die nicht vollständig gefüllt sind, umzusortieren. So dass die Lagerbehälter immer einen Füllgrad aufweisen, der so groß wie möglich ist. Durch dieses Vorgehen wird ein hoher Volumennutzungsgrad erreicht. Vorteilhafterweise umfasst das erfindungsgemäße Verfahren einen Verfahrensschritt I. zum Sortieren von Artikeln und einen Verfahrensschritt II. zum Kommissionieren von Artikeln. Je nach momentanem Bedarf wird erfindungsgemäß der Verfahrensschritt I. oder II. durchgeführt. Das heißt, bei großer Kundennachfrage und damit hohem Aufkommen an Kommissionierungsvorgängen wird vorwiegend kommissioniert und bei mäßiger Kundennachfrage können unsortierte Artikel sortiert werden, sortierte Artikel umsortiert werden oder fehlerbehaftete Lagerbehälter erneut sortiert werden. Dies hat den Vorteil, dass das Verfahren äußerst ökonomisch ist und damit wirtschaftlich große Vorteile mit sich bringt. Beide Verfahrensschritte werden mit der Vorrichtung durchgeführt Vorteilhafterweise können damit zwei Arbeitsschritte, sortieren und kommissionieren mit einer Vorrichtung durchgeführt werden. Dies spart Kosten, da statt zwei Vorrichtungen nur eine Vorrichtung angeschafft und unterhalten werden muss. Besonders im Vergleich zu den eingangs beschriebenen Regallagern, bei denen eine Kommissionierung über lange Fördertechniken stattfindet, bietet die Vorrichtung eine große Platzersparnis. Insbesondere wenn in der Vorrichtung ein Warenlager, das nach dem Chaotischen Prinzip oder dem ABC-Prinzip einlagert, genutzt wird, bietet sich ein wesentlich größerer Volumennutzungsgrad für die eingelagerten Artikel.

Darüber hinaus ermöglicht das erfindungsgemäße Verfahren es überhaupt erst ein Warenlager, das nach dem Chaotischen Prinzip oder dem ABC-Prinzip Artikel einlagert, für die Kommissionierung von Artikeln im Versandgeschäft nutzbar zu machen. Im Stand der Technik werden bisher Artikel aus einem solchen Warenlager kommissioniert indem ein Lagerbehälter präsentiert wird aus dem ein gewünschter Artikel entnommen wird, anschließend wird dieser Lagerbehälter wieder im Warenlager eingelagert und der nächste Lagerbehälter wird präsentiert, aus dem wiederum ein Artikel entnommen wird und so weiter bis die Kommissionierliste für einen Versandkarton abgearbeitet ist. So wird für jeden Versandkarton mit der dazugehörigen Kommissionierliste vorgegangen. Dieses Verfahren ist jedoch sehr langsam, da Artikel die besonders häufig gebraucht werden, das heißt in aufeinanderfolgende Versandkartons kommissioniert werden müssen, für das Kommissionieren jedes Versandkartons aufs Neue aus dem Warenlager geholt werden müssen. Durch Anwendung des Chaotischen Prinzips oder auch des ABC-Prinzips beim Einlagern müssen die Lagerbehälter oft erst mehrmals umgestapelt werden, bevor der gewünschte Lagerbehälter präsentiert werden kann. Dies macht die Verfahren aus dem Stand der Technik zu langsam, um einem großen Auftragsvolumen, wie es im Versandhandel beispielsweise für Apotheken oder Drogerieartikel üblich ist, gerecht zu werden.

Das erfindungsgemäße Verfahren beseitigt diese Nachteile des Standes der Technik, da mehrere Lagerbehälter auf einmal präsentiert werden, welche die laut Kommissionierlisten in Versandkartons zu kommissionierenden Artikel präsentieren. Es können damit mehrere Versandkartons nacheinander kommissioniert werden, ohne dass zwischenzeitlich die Lagerbehälter in ein Warenlager eingelagert oder aus diesem geholt werden müssen. Dies bringt eine große Zeitersparnis mit sich und steigert damit die Wirtschaftlichkeit des Verfahrens.

In einer bevorzugten Ausführungsform der Erfindung wird das erfindungsgemäße Verfahren zum Sortieren und Kommissionieren von Versandartikeln, insbesondere Apothekenartikeln und Drogerieartikeln verwendet.

Das erfindungsgemäße Verfahren und die Vorrichtung werden nachfolgend anhand von einer Figur näher erläutert.

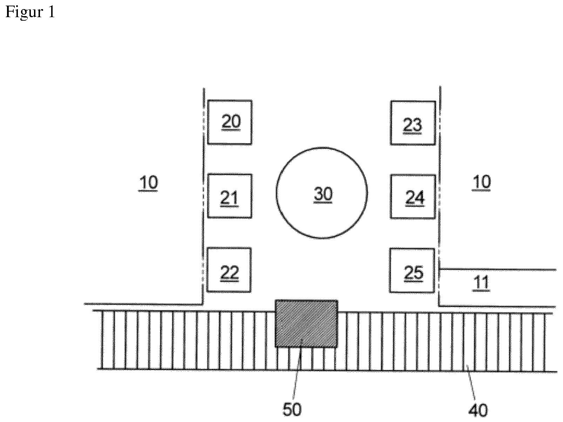

Figur 1 zeigt eine Ausgestaltung einer nicht zur Erfindung gehörenden Vorrichtung. Figur 1 zeigt eine Ausgestaltung einer Vorrichtung, die sechs Präsentiertische 20, 21, 22, 23, 24, 25 aufweist. Die Präsenstiertische 20, 21, 22, 23, 24 und 25 haben Zugang zum Warenlager 10, wobei der Präsentiertisch 25 Zugang zum Warenlager 10 und zum Warenlager 11 hat. Aus den jeweiligen Warenlagern können Lagerbehälter auf den Präsentiertischen präsentiert werden oder aber von den Präsentiertischen in den Warenlagern eingelagert werden. In der Mitte der Präsentiertische 20, 21, 22, 23, 24, 25 befindet sich ein Roboter mit Greifeinheit 30, der so positioniert ist, dass die Greifeinheit des Roboters jeden Präsentiertisch erreichen kann, so dass der Roboter in dort präsentierte Lagerbehälter oder Zielbehälter hineingreifen kann. Weiterhin weist die Vorrichtung eine Fördertechnik 40 auf. Diese transportiert Zielbehälter 50, der Übersichtlichkeit halber ist in der Figur 1 nur ein Zielbehälter 50 dargestellt. Dieser wird so zum Roboter 30 positioniert, dass dessen Greifeinheit in den Zielbehälter 50 hineingreifen kann.

### Bezugszeichenliste

- 10,11: Warenlager
- 20, 21 ,22, 23, 24, 25: Präsentiertisch
- 30: Roboter mit Greifeinheit
- 40: Fördertechnik
- 50: Zielbehälter

## Patentansprüche

1. Verfahren zum Sortieren und Kommissionieren von Artikeln, umfassend die Verfahrensschritte
I. Sortieren von Artikeln aus mindestens einem Lagerbehälter in mindestens einen sortierten Zielbehälter (50);
und
II. Kommissionieren von Artikeln aus mindestens einem Lagerbehälter in mindestens einen Zielbehälter (50) nach einer vorgegebenen Kommissionierliste;
wobei der Verfahrensschritt II. die Schritte umfasst
a. Erfassen der Artikel, die in einem bestimmten Zeitraum in Zielbehälter (50) kommissioniert werden sollen und bestimmen der Häufigkeit jedes in diesem Zeitraum zu kommissionierenden Artikels anhand von Kommissionierlisten;
b. Präsentieren eines Lagerbehälters, der den am häufigsten zu kommissionierenden Artikel enthält;
c. Optional präsentieren des Lagerbehälters, der den Artikel enthält, der mit der nächstgrößten Häufigkeit zu kommissionieren ist;
d. Optional präsentieren weiterer Lagerbehälter mit den Artikeln, die mit der jeweils nächstgrößten Häufigkeit zu kommissionieren sind;
e. Präsentieren eines Zielbehälters (50);
f. Identifikation des Zielbehälters (50) und Verknüpfen des Zielbehälters (50) mit einer Kommissionierliste;
g. Entnehmen eines Artikels, der auf der Kommissionierliste des Zielbehälters (50) vorkommt aus einem Lagerbehälter;
**dadurch gekennzeichnet, dass** der Verfahrensschritt II. zudem die Schritte umfasst
h. Einlesen des Codes des Artikels und/oder Aufnahme mindestens eines Bildes und Identifikation des Artikels;
i. Vergleich des Artikels mit dem laut Kommissionierliste zu kommissionierenden Artikel;
j. Ablage des Artikels in dem Zielbehälter (50) wenn der Artikel mit dem laut Kommissionierliste zu kommissionierenden Artikel übereinstimmt;
k. Wiederholung der Schritte g. bis j. bis alle Artikel der Kommissionierliste des Zielbehälters (50) in den Zielbehälter (50) kommissioniert sind;
l. Abtransport des Zielbehälters (50);
m. Wiederholen der Schritte e. bis l. bis alle Artikel, die in dem bestimmten Zeitraum in Zielbehälter (50) kommissioniert werden sollen, kommissioniert sind;
und wobei das Verfahren nach dem Schritt i. zusätzlich die folgenden Schritte aufweist, wenn der Artikel aus dem Lagerbehälter nicht mit dem laut Kommissionierliste zu kommissionierendem Artikel übereinstimmt:
ia. Ablage des Artikels, der laut Kommissionierliste nicht mit dem zu kommissionierenden Artikel übereinstimmt, in dem Lagerbehälter;
ib. Übergabe des Lagerbehälters an das Warenlager (10,11);
ic. Präsentieren eines weiteren Lagerbehälters, der den zu kommissionierenden Artikel enthält;
id. Entnehmen eines Artikels aus dem Lagerbehälter;
ie. Einlesen des Codes des Artikels und/oder Aufnahme mindestens eines Bildes und Identifikation des Artikels; und
if. Vergleich des Artikels mit dem laut Kommissionierliste zu kommissionierenden Artikel;
ig. Stimmte der Artikel mit dem laut Kommissionierliste zu kommissionierendem Artikel überein, wird das Verfahren bei Schritt j. fortgesetzt, stimmt der Artikel mit dem laut Kommissionierliste zu kommissionierendem Artikel nicht überein, wird das Kommissioniern abgebrochen,
wobei der Lagerbehälter aus Schritt ib. dem Verfahrensschritt I. zugeführt wird, um die darin befindlichen Artikel erneut zu sortieren.

2. Verfahren nach Anspruch 1, **dadurch gekennzeichnet, dass** Verfahrensschritt I. die Schritte umfasst
A. Präsentieren eines Lagerbehälters mit Artikeln auf einem Präsentiertisch (20, 21, 22, 23, 24, 25);
B. Präsentieren von mindestens einem Zielbehälter (50) auf mindestens einem weiteren Präsentiertisch (20, 21, 22, 23, 24, 25);
C. Optional Identifikation des mindestens einen Zielbehälters (50) und jedes weiteren Zielbehälters (50);
D. Entnehmen eines Artikels aus dem Lagerbehälter und Einlesen des Codes des Artikels und/oder Aufnahme mindestens eines Bildes und Identifikation des Artikels;
E. Ablage des Artikels in dem mindestens einen Zielbehälter (50) oder einem der weiteren Zielbehälter (50);
F. Verknüpfung der Kennzeichnung des mindestens einen Zielbehälters (50) oder der Kennzeichnung eines der weiteren Zielbehälter (50) mit dem Code und/oder dem Bild des darin abgelegten Artikels;
G. Optional Einlagern des mindestens einen Zielbehälters (50) oder eines der weiteren Zielbehälter (50) oder aller Zielbehälter (50) nach Beendigung des Sortiervorgangs in einem Warenlager (10, 11).

3. Verfahren nach Anspruch 2, **dadurch gekennzeichnet, dass** 1 bis 9, bevorzugt 2 bis 8, besonders bevorzugt 5 Zielbehälter (50) in Schritt B. gleichzeitig präsentiert werden.

4. Verfahren nach einem der vorangegangenen Ansprüche, **dadurch gekennzeichnet, dass** der Zielbehälter (50) über einen angebrachten Code identifiziert wird und über diesen Code mit einer Kommissionierliste verknüpft wird.

5. Verfahren nach einem der vorangegangenen Ansprüche, **dadurch gekennzeichnet, dass** der Zielbehälter (50) nach dem fertigen Kommissionieren über eine Fördertechnik (40) weiter transportiert wird.

6. Vorrichtung oder Verfahren nach einem der vorangegangenen Ansprüche, **dadurch gekennzeichnet, dass** das Warenlager (10, 11) Lagerbehälter nach dem Chaotischen Prinzip oder dem ABC-Prinzip einlagert.

## Claims

1. Method for sorting and picking items, comprising the method steps of
I. sorting items from at least one storage container into at least one sorted target container (50);
and
II. picking items from at least one storage container and placing them into at least one target container (50) in accordance with a prescribed pick list;
wherein method step II. comprises the steps of
a. detecting the items which are intended to be picked and placed into target containers (50) in a specific time period and determining the frequency of occurrence of each item to be picked in this time period on the basis of pick lists;
b. presenting a storage container which contains the most frequently occurring item to be picked;
c. optionally presenting the storage container which contains the item which is to be picked with the next highest frequency;
d. optionally presenting further storage containers containing the items which are to be picked with the respectively next highest frequency;
e. presenting a target container (50);
f. identifying the target container (50) and linking the target container (50) with a pick list;
g. removing an item which appears on the pick list of the target container (50) from a storage container;
**characterized in that** method step II. additionally comprises the steps of
h. reading the code of the item and/or recording at least one image and identifying the item;
i. comparing the item with the item to be picked according to the pick list;
j. depositing the item in the target container (50) if the item corresponds to the item to be picked according to the pick list;
k. repeating steps g. to j. until all the items on the pick list for the target container (50) have been picked and placed into the target container (50);
l. transporting away the target container (50);
m. repeating steps e. to 1. until all the items which are intended to be picked and placed into target containers (50) in the specific time period have been picked;
and wherein the method, following step i., additionally includes the following steps if the item from the storage container does not correspond to the item to be picked according to the pick list:
ia. depositing the item which does not correspond to the item to be picked according to the pick list in the storage container;
ib. transferring the storage container to the warehouse (10, 11) ;
ic. presenting a further storage container which contains the item to be picked;
id. removing an item from the storage container;
ie. reading the code of the item and/or recording at least one image and identifying the item; and
if. comparing the item with the item to be picked according to the pick list;
ig. if the item corresponds to the item to be picked according to the pick list, the method is continued at step j., and, if the item does not correspond to the item to be picked according to the pick list, picking is discontinued,
wherein the storage container from step ib. is fed to method step I. in order to re-sort the items contained in it.

2. Method according to Claim 1, **characterized in that** method step I. comprises the steps of
A. presenting a storage container containing items on a presentation table (20, 21, 22, 23, 24, 25);
B. presenting at least one target container (50) on at least one further presentation table (20, 21, 22, 23, 24, 25);
C. optionally identifying the at least one target container (50) and each further target container (50);
D. removing an item from the storage container and reading the code of the item and/or recording at least one image and identifying the item;
E. depositing the item in the at least one target container (50) or one of the further target containers (50);
F. linking the identifier of the at least one target container (50) or the identifier of one of the further target containers (50) with the code and/or the image of the item deposited in it;
G. optionally storing the at least one target container (50) or one of the further target containers (50) or all of the target containers (50) in a warehouse (10, 11) after the sorting process is complete.

3. Method according to Claim 2, **characterized in that** 1 to 9, preferably 2 to 8, particularly preferably 5, target containers (50) are presented simultaneously in step B.

4. Method according to any of the preceding claims, **characterized in that** the target container (50) is identified by way of an attached code and is linked to a pick list by way of this code.

5. Method according to any of the preceding claims, **characterized in that** the target container (50) is transported further via a conveying means (40) after picking is finished.

6. Device or method according to any of the preceding claims, **characterized in that** the warehouse (10, 11) stores storage containers in accordance with the chaotic principle or the ABC principle.

## Revendications

1. Procédé de tri et de préparation de commandes d'articles, comprenant les étapes suivantes
I. tri d'articles provenant d'au moins un contenant de stockage dans au moins un contenant cible trié (50) ;
et
II. préparation de commandes d'articles à partir d'au moins un contenant de stockage dans au moins un contenant cible (50) selon une liste de préparation de commandes prédéfinie ;
l'étape II. comprenant les étapes suivantes
a. collecte des articles qui doivent être préparés dans des contenants cibles (50) pendant une période donnée et détermination de la fréquence de chaque article à préparer pendant cette période à l'aide de listes de préparation de commande ;
b. présentation d'un contenant de stockage qui contient l'article à préparer le plus fréquemment ;
c. en option, présentation du contenant de stockage qui contient l'article qui doit être préparé avec la fréquence la plus proche ;
d. en option, présentation de contenants de stockage supplémentaires avec les articles qui doivent être préparés avec la fréquence la plus élevée suivante ;
e. présentation d'un contenant cible (50) ;
f. identification du contenant cible (50) et association du contenant cible (50) à une liste de préparation de commande ;
g. prélèvement, hors d'un contenant de stockage, d'un article qui figure sur la liste de préparation de commande du contenant cible (50) ;
**caractérisé en ce que** l'étape II. comprend en plus les étapes suivantes
h. lecture du code de l'article et/ou capture d'au moins une image et identification de l'article ;
i. comparaison de l'article avec l'article à préparer selon la liste de préparation de commande ;
j. dépose de l'article dans le contenant cible (50) si l'article concorde avec l'article à préparer selon la liste de préparation de commande ;
k. répétition des étapes g. à j. jusqu'à ce que tous les articles de la liste de préparation de commande du contenant cible (50) aient été préparés dans le contenant cible (50) ;
l. enlèvement du contenant cible (50) ;
m. répétition des étapes e. à 1. jusqu'à ce que tous les articles qui doivent être préparés dans le contenant cible (50) pendant la période déterminée soient préparés ;
et le procédé comprenant en outre les étapes suivantes après l'étape i. lorsque l'article provenant du contenant de stockage ne concorde pas avec l'article à préparer selon la liste de préparation de commande :
ia. dépose de l'article qui, selon la liste de préparation de commande, ne coïncide pas avec l'article à préparer, dans le contenant de stockage ;
ib. transfert du contenant de stockage à l'entrepôt (10, 11) ;
ic. présentation d'un contenant de stockage supplémentaire qui contient l'article à préparer ;
id. prélèvement d'un article hors du contenant de stockage ; ie. lecture du code de l'article et/ou capture d'au moins une image et identification de l'article ; et
if. comparaison de l'article avec l'article à préparer selon la liste de préparation de commande ;
ig. si l'article coïncide avec l'article à préparer selon la liste de préparation de commande, le procédé se poursuit à l'étape j., si l'article ne coïncide pas avec l'article à préparer selon la liste de préparation de commande, la préparation de commande est interrompue,
le contenant de stockage issu de l'étape ib. étant acheminé à l'étape I. du procédé afin de trier à nouveau les articles qui se trouvent dans celui-ci.

2. Procédé selon la revendication 1, **caractérisé en ce que** l'étape I. comprend les étapes suivantes
A. présentation d'un contenant de stockage comprenant des articles sur une table de présentation (20, 21, 22, 23, 24, 25) ;
B. présentation d'au moins un contenant cible (50) sur au moins une table de présentation supplémentaire (20, 21, 22, 23, 24, 25) ;
C. en option, identification de l'au moins un contenant cible (50) et de chaque contenant cible supplémentaire (50) ;
D. prélèvement d'un article dans le contenant de stockage et lecture du code de l'article et/ou capture d'au moins une image et identification de l'article ;
E. dépose de l'article dans l'au moins un contenant cible (50) ou dans l'un des contenants cibles supplémentaires (50) ;
F. association de l'identification de l'au moins un contenant cible (50) ou de l'identification de l'un des contenants cibles supplémentaires (50) avec le code et/ou l'image de l'article qui est déposé dans celui-ci ;
G. en option, stockage de l'au moins un contenant cible (50) ou de l'un des contenants cibles supplémentaires (50) ou de tous les contenants cibles (50) dans un entrepôt (10, 11) après la fin de l'opération de tri.

3. Procédé selon la revendication 2, **caractérisé en ce que** de 1 à 9, de préférence de 2 à 8, de manière particulièrement préférée 5 contenants cibles (50) sont présentés simultanément à l'étape B.

4. Procédé selon l'une des revendications précédentes, **caractérisé en ce que** le contenant cible (50) est identifié par le biais d'un code apposé et est associé à une liste de préparation de commandes par le biais de ce code.

5. Procédé selon l'une des revendications précédentes, **caractérisé en ce que** le transport du contenant cible (50) se poursuit après la préparation de commandes terminée par le biais d'un système de convoyage (40).

6. Dispositif ou procédé selon l'une des revendications précédentes, **caractérisé en ce que** l'entrepôt (10, 11) stocke des contenants de stockage selon le principe chaotique ou le principe ABC.
